# EUROPÄISCHE PATENTSCHRIFT

(11) **EP 0 645 702 B1**
(45) Veröffentlichungstag und Bekanntmachung des Hinweises auf die Patenterteilung: **02.08.2000**
(21) Anmeldenummer: 93115467.8
(22) Anmeldetag: 24.09.1993
(51) Int. Cl.: G06F 9/46, H04M 3/36, H04Q 3/545

(54) **Verfahren zum Lastausgleich in einem Multiprozessorsystem**
Load balancing method in a multiprocessor system
Méthode d'équilibrage de la charge dans un système multiprocesseur

(43) Veröffentlichungstag der Anmeldung: 29.03.1995
(73) Patentinhaber: SIEMENS AKTIENGESELLSCHAFT, 80333 München (DE)
(72) Erfinder: Witte, Martin, Dr., D-81673 München (DE); Oehlerich, Jörg, D-82131 Stockdorf (DE); Held, Walter, D-82538 Geretsried (DE)

(56) Entgegenhaltungen:
- US-A- 4 974 256
- SOFTWARE PRACTICE & EXPERIENCE Bd. 19, Nr. 5 , Mai 1989 , CHICHESTER GB Seiten 411 - 435 XP98633 PIYUSH DIKSHIT ET AL. 'SAHAYOG: a test bed for evaluating dynamic load-sharing policies'
- IEEE TRANSACTIONS ON COMPUTERS Bd. 38, Nr. 8 , August 1989 , NEW YORK US Seiten 1124 - 1142 XP47581 KANG G. SHIN ET AL. 'Load sharing in distributed real-time systems with state-change broadcasts'
- PROC. 12TH INT. CONF. ON DISTRIBUTED COMPUTING SYSTEMS 9. Juni 1992 , IEEE, LOS ALAMITOS, US Seiten 82 - 89 XP341000 JUNGUK KIM ET AL. 'An all-sharing load balancing protocol in distributed systems on the CSMA/CD local area network'
- PROC. 11TH INT. TELETRAFFIC CONGRESS 4. September 1985 , ELSEVIER, AMSTERDAM, NETHERLANDS Seiten 835 - 841 M. VILLEN ALTAMIRANO ET AL. 'An overload control strategy for distributed control systems'

## Beschreibung

Die Erfindung betrifft ein Verfahren zum Lastausgleich in einem Multiprozessorsystem, bei dem anfallende Aufgaben von mehreren Prozessoren unter Realzeitbedingungen abgearbeitet werden können.

Wenn es sich bei dem Multiprozessorsystem um ein prozessorgesteuertes Kommunikationssystem handelt, wird das Kommunikationssystem aufgrund eines prognostizierten Vermittlungsaufkommens und/oder einzuhaltender Mindestanforderungen, wie beispielsweise die an die Verbindungsaufbauzeiten (Through Connection Delay), dimensioniert. Ein wesentlicher Parameter der die Dimensionierung eines Vermittlungssystems bestimmt, wird mit dem zu erwartenden Verkehrswert vorgeben. Dieser Verkehrswert ergibt sich dabei aus dem Quotienten der sich aus der Summe der Belegungsdauer - bezogen auf die Belegungen in einem Beobachtungsintervall errechnet. Ein nach den herkömmlichen Verkehrserwartungen dimensioniertes prozessorgesteuertes Kommunikationssystem muß jedoch weitgehendst auch alle ankommenden Vermittlungsanfragen bei auftretenden Spitzenbelastungen, die an bestimmten Tagen, einzelnen Tagesstunden oder nicht vorherbestimmbaren Ereignissen auftreten, beispielsweise unter Zuhilfenahme von Lastausgleichsverfahren, abarbeiten können.

Aus SOFTWARE PRACTICE & EXPERIENCE Bd. 19, Nr. 5 , Mai 1989 , CHICHESTER GB Seiten 411 - 435 XP98633 PIYUSH DIKSHIT ET AL. 'SAHAYOG: a test bed for evaluating dynamic load-sharing policies' sind verschiedene Lastausgleichsverfahren bekannt.

Der Erfindung liegt die Aufgabe zugrunde, ein Lastausgleichsverfahren für ein Realzeitsystem anzugeben, das gewährleistet, daß auch in Starklastsituationen möglichst wenig Prozessoranforderungen abgewiesen werden.

Die Aufgabe wird durch die Merkmale des Patentanspruchs 1 gelöst.

Die Erfindung bringt den Vorteil mit sich, daß auf Grund der Berücksichtigung von Lastzuständen von Prozessoren die Überlast einzelner Prozessoren auf freie, nicht überlastete Prozessoren verteilt wird, wobei die verteilten Aufgaben keine zusätzlichen Lastschwankungen innerhalb von vermaschten Prozessoren verursachen sowie die Einhaltung der Through Connection Delays dadurch nicht beeinflußt werden.

Desweiteren bringt die Erfindung neben dem Vorteil, daß die in "Unterlast" befindlichen Prozessoren vor Überlastung durch verteilte Aufgaben geschützt werden, den weiteren Vorteil mit sich, daß die Auslastung des Prozessors an seiner "Hochlastschwelle" orientiert wird.

Eine Ausgestaltung der Erfindung ist, daß die Lastkennwerte mit einem Hysteresewert beaufschlagt werden, was den Vorteil mit sich bringt, daß Überschwingungen bei Eintritt in den Überlastfall vermieden werden.

Eine weitere Ausgestaltung der Erfindung ist, daß zusätzliche Aufgaben auch durch einen Prozessor abgearbeitet werden, dessen Lastzustand mit "high" eingestuft wird, dies bringt den Vorteil mit sich, daß die Anzahl der zugewiesenen fremden Aufgaben pro Prozessor an seiner zur Verfügung stehenden freien Kapazität orientiert werden.

Eine Ausgestaltung der Erfindung ist, daß der Anteil der von einem in Überlast befindlichen Prozessor wegzuverteilenden Aufgaben aus der Lastkennzahl ermittelt wird.

Eine Ausgestaltung der Erfindung ist, daß zur selbst bearbeiteten Last die verteile Last geschätzt dazu addiert wird. Dies bringt den Vorteil mit sich, daß erst wenn die geschätzte tatsächlich am Prozessor anliegende Last unter eine Hochlastschwelle sinkt und eine vermittlungstechnische Überlasteinstufung auf Null gesetzt und eine Sicherheitsperiode eingehalten wurde, die Überlastsituation des Prozessors als beendet angesehen wird.

Vorteilhafte Weiterbildungen der Erfindung sind in den Unteransprüchen angegeben.

Weitere Besonderheiten der Erfindung werden aus der nachfolgenden näheren Erläuterung eines Ausführungsbeispiels, in Form eines Kommunikationssystems, anhand der Zeichnungen ersichtlich.

Es zeigen:
- Fig 1.: einen Teil eines Kommunikationssystems,
- Fig 2.: Prozeß-Verarbeitungseinheiten eines solchen zum Kommunikationssystem gehörenden Gruppenprozessors,
- Fig 3.: ein Schema für das erfindungsgemäße Verfahren, und
- Fig 4.: ein Ablaufdiagramm.

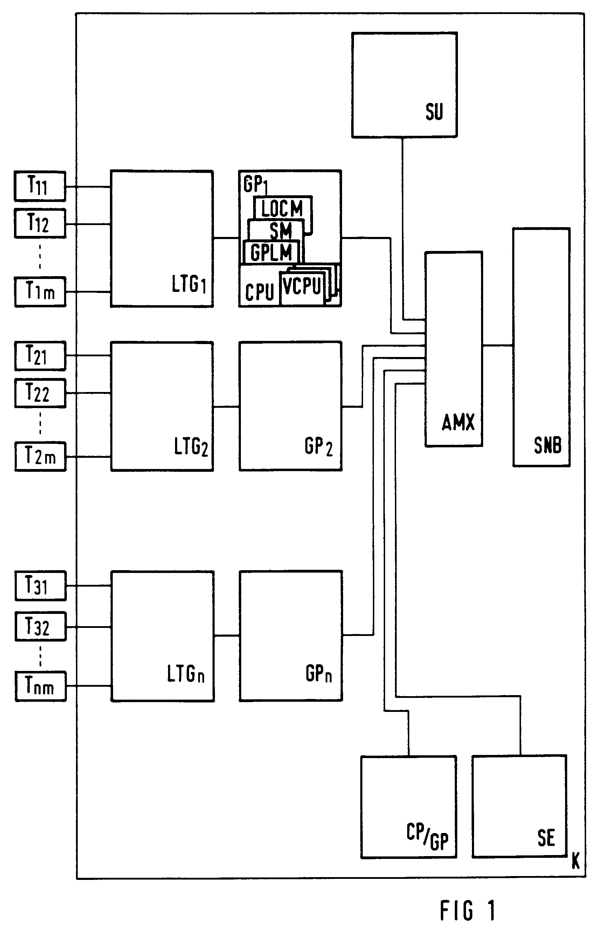

Fig 1 zeigt schematisch, in einem zum Verständnis der Erfindung erforderlichen Umfang Komponenten eines Kommunikationssystems K. Diese Komponenten sind Teilnehmerendgeräte Tn1,...,Tnm, Anschlußbaugruppen LTG1,....,LTGn für den Anschluß der mit diesen Teilnehmerendgeräten verbindenden Teilnehmeranschlußleitungen, Gruppenprozessoren GPn, ein Koordinationsprozessor CP oder ein weiterer die Funktionen eines Koordinationsprozessors übernehmender Gruppenprozessor GP, eine Schnittstelleneinrichtung SE zu weiteren Vermittlungssystemen, eine Serviceinheit SU, einem im Asynchronen Transfer Mode arbeitenden Multiplexer AMX sowie ein Koppelnetz SNB, daß mit einem Asynchronem Transfer Mode ATM Verbindungswege zu gewünschten Teilnehmerendgeräten Tnm durchschaltet. Die Ahschlußbaugruppen LTGn fassen jeweils eine Mehrzahl von Teilnebmerendgeräten zusammen. Vermittlungstechnische Aufgaben die in den Anschlußbaugruppen LTGn anfallen werden jeweils durch mindestens einen Gruppenprozessor GPi bearbeitet. Die in einem Kommunikationssystem K verwendenten Gruppenprozessoren GPn sind dabei im wesentlichen alle gleichartig strukturiert. Die Gruppenprozessoren GPn haben über den Multiplexer AMX Zugang zu weiterverarbeitenden Einheiten des Kommunikationssystems K. An diesen Multiplexer AMX sind neben den Gruppenprozessoren GPn die Service Einheit SU, das Koppelnetz SNB als auch weitere Prozessoren, wie beispielsweise ein Koordinationsprozessor CP angeschlossen. Über den Asynchronen Transfer Mode Multiplexer AMX besteht unter anderem auch ein Zugang zu anderen Vermittlungssystemen.

Die Gruppenprozessoren GPn sind hauptsächlich für den Verbindungsaufbau und Verbindungsabbau zuständig. Sie besitzen zudem zur Abwicklung solcher vermittlungstechnischer Aufgaben Kenndaten über die speziellen Ausprägungen der an ihnen angeschlossenen Anschlußbaugruppen LTGn. Der Datenaustausch zwischen den Gruppenprozessoren GPn findet über den AMX statt.

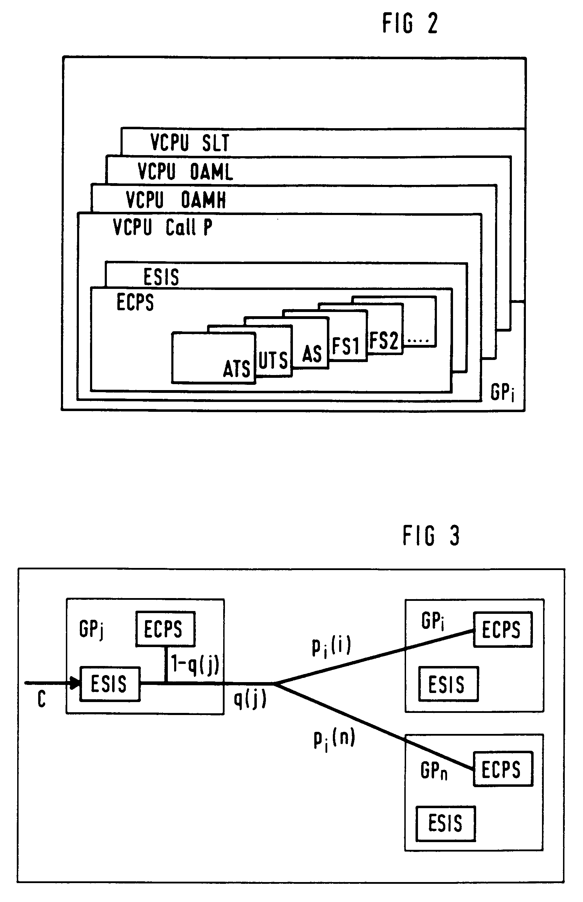

Fig. 2 zeigt einige für die Erfindung wesentliche Systemkomponenten des Gruppenprozessors GPi. Der Gruppenprozessor GPi wird intern in eine Vielzahl virtueller Prozessoreinheiten VCPUs unterteilt, die jeweils für verschiedene Aufgaben zuständig sind. Die Zuweisung der Rechenzeit der "Central Prozessor Unit" CPU an die jeweiligen Mikroprozessoreinheit VCPUs erfolgt über ein spezielles Zuweisungsverfahren (Scheduling). Im Zusammenhang mit der Erfindung ist die virtuelle Prozessoreinheit VCPU-CallP von besonderem Interesse, da sie für die Vermittlung der Telefonverbindungen zuständig ist. Die virtuelle Prozessoreinheit VCPU-CallP setzt sich intern aus einer Vielzahl von Prozessen zusammen:
Beispielsweise seien hier einige Prozesse sowie deren Aufgaben aufgeführt:
   - ESIS: Extended Signalling and Interworking Subsystem Das EWSX Signalling and Interworking Subsytem ESIS bildet die Schnittstelle zwischen den verschiedenen an die Anschlußbaugruppen LTGn zugeordneten Teilnehmerendgeräten Tn1,...,Tnm und führt die Anpassung zwischen externen Signalisierungssystemen und dem internen Message Interface durch.
   - ECPS: Extended Call Prozessing Subsystem Dieses Subsystem ist für die Verarbeitung des Call-Routing, Call-Setups, Call-Cleardown sowie spezielle Features zuständig. Zur Abarbeitung dieser Prozesse können spezielle Dienstleistungen, wie die des ATS(Access Transaction Segment), UTS (User Transaction Segment), AS (Associator Segment)...., in Anspruch genommen werden.

Diese Prozesse kommunizieren miteinander über sogenannte Messages. Pro Verbindung eines Calls, einer von einem Teilnehmerendgerät Tnm ausgelösten Prozedur zum Verbindungsaufbau, werden dabei eine Vielzahl von Messages zwischen den einzelnen Prozessen verschickt. Dieser im Einzelfall aus weit über 100 Meldungsprozeduren bestehende Meldungsverkehr läuft pro Call auf einen einzigen Gruppenprozessor GPi ab. Wird ein Call verteilt, laufen die Messages zwischen dem Prozeß ESIS, der sich auf dem "Heim-Gruppenprozessor" GPj befindet und den ECPS Prozessen sowie weiteren vermittlungstechnischen Prozessen über das ATM Netz auf einen noch "belastbaren" Gruppenprozessor GPx ab.

Fig. 3 zeigt schematisch ein Verteilschema, daß an den Gruppenprozessor GPj anliegende Calls C an noch "belastbare" Gruppenprozessoren GPx weiterleitet.
Ein in den Gruppenprozessor GPn implementierter Load-Manager GPLM, der durch die virtuelle Prozessoreinheit Operation & Maintainance (high prioity) VCPU-OAMH jeweils eine Prozessorzeit zur Abarbeitung seiner Aufgaben zugewiesen bekommt, ermittelt den augenblicklichen Lastzustand (Gruppenprozessor Load State) GPLS des Gruppenprozessors sowie einen Wert OPL (Overload Priority Level) der eine spezifische vermittlungstechnische Überlastabwehrstufe angibt. Diese spezifische vermittlungstechnische Überlastabwehrstufe OPL wird jeweils im Lastzustand - "overload"- des Gruppenprozessors ermittelt. Folgende Lastzustände - normal, high, overload und extreme - des Gruppenprozessors GPn werden entsprechend der Belastung der zentralen Prozessoreinheit CPU des Gruppenprozessors vom Load-Manager GPLM ermittelt. Die einzelnen Lastzustände GPLS des Gruppenprozessors GPx sind dabei beispielsweise wie folgt charakterisiert:
GPLS-normal:
   Die Auslastung des Gruppenprozessors ist unterhalb seiner für ihn definierten Normallastschwelle. Die Normallastschwelle liegt beispielsweise bei 0,71 Erlang. (Erlang ist die Einheit des Verkehrswertes, wobei 0.71 Erlang einer Auslastung des Gruppenprozessors von 71 Prozent entspricht)
GPLS-high :
   Der Gruppenprozessor befindet sich in Hochlast, das heißt oberhalb seiner Normallastschwelle. In diesem Zustand werden noch keine Überlastabwehrmaßnabmen für den Gruppenprozessor eingeleitet.
GPLS-overload:
   Der Gruppenprozessor befindet sich in Überlast. Aufgaben die vom Gruppenprozessor zu erledigen wären, werden soweit möglich, kurzfristig auf andere, nicht überlastete Gruppenprozessoren GPn übertragen. Die Überlastschwelle liegt beispielsweise bei > 0,8 Erlang.

Der auf dem Gruppenprozessor GPn implementierte Load Manager GPLM ist neben der Ermittlung der Lastzustände GPLS auch für die Bestimmung der vermittlungstechnischen Überlastabwehrstufen OPL während der Auslastphase -overload- des Gruppenprozessors GPn zuständig. Die vermittlungstechnischen Überlaststufen OPLn sind ein Maß für die Intensität der Überlastabwehr, die während sich der Gruppenprozessor GPn in Überlast befindet, von den vermittlungstechnischen Prozessoren und der dazugehörenden Peripherie durchgeführt werden können. Die vermittlungstechnischen Überlaststufen OPL werden dabei vorzugsweise in Stufen zwischen 0 und 6 unterteilt:
- -OPL 0: bedeutet keine Abwehr, bei
- -OPL 1: es werden ca. 16 Prozent aller neu ankommenden Calls abgewiesen, bei
- -OPL 6: werden nur noch Calls akzeptiert die über priorisierte Verbindungsleitungen von einem anderen Kommunikationssystem eintreffen.

Die hier aufgeführten Lastzustände GPLS des Gruppenprozessors GPn sowie die vermittlungstechnischen Überlaststufen OPLn können beliebig, entsprechend der Dimensionierung des Kommunikationssystems K, verfeinert oder abgerundet werden.

Ist ein Gruppenprozessor GPi nicht im Lastzustand "overload", wird kein Call weiterverteilt. Ist ein Gruppenprozessor jedoch in dem Lastzustand "overload" so wird ein Anteil der neu ankommenden Calls anhand eines Wertes q, der zwischen 0 und 1 schwankt, bestimmt der zur weiteren Abarbeitung an freie Gruppenprozessoren GPx weitergeleitet werden sollte. Durch einen weiteren ermittelbaren Wert p, der die Aufnahmefähigkeit für weitere Calls der übrigen Gruppenprozessoren wiedergibt, wird festgelegt, ob aufgrund der Gesamtauslastung dieser Gruppenprozessoren GPn des Kommunikationssystems K überhaupt verteilt werden kann. Wenn entschieden ist , daß ein Call verteil werden soll, wird entsprechend der ermittelten Werte p der Gruppenprozessoren bestimmt, welche "Ziel Gruppenprozessoren" GPx zur Abarbeitung der ECPS Prozeduren bereitgestellt werden.

Die Werte q und p werden von jedem Gruppenprozessor GPn aus den Lastzuständen GPLS und seines eigenen Lastwertes a lokal berechnet. Nachfolgend ist ein Pseudocode zur Berechnung der Werte p und q angegeben.

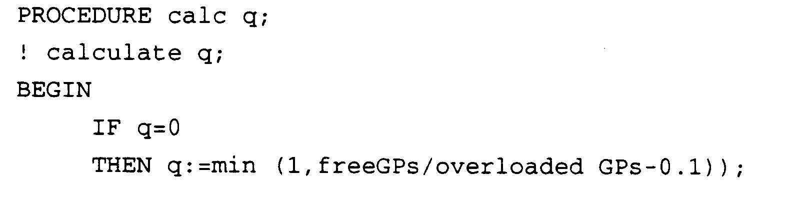

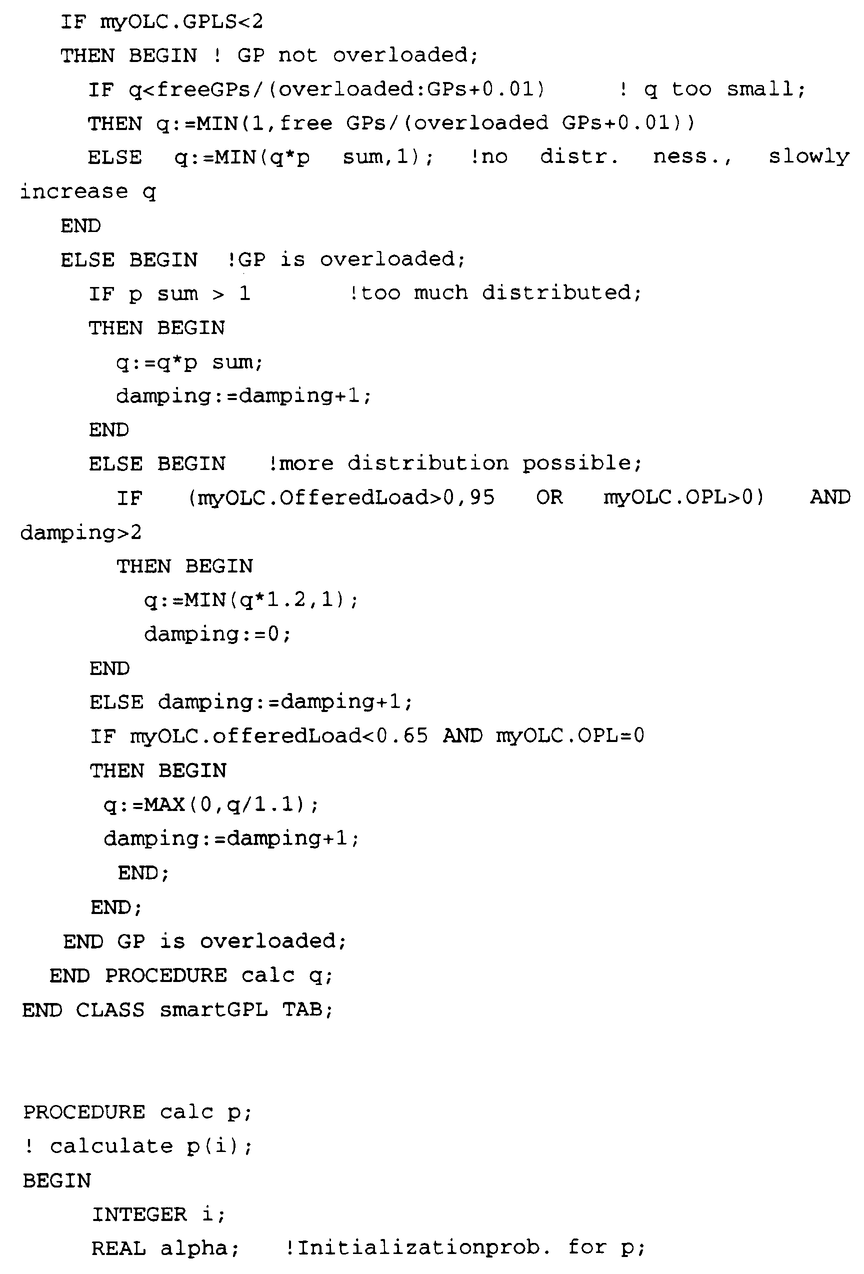

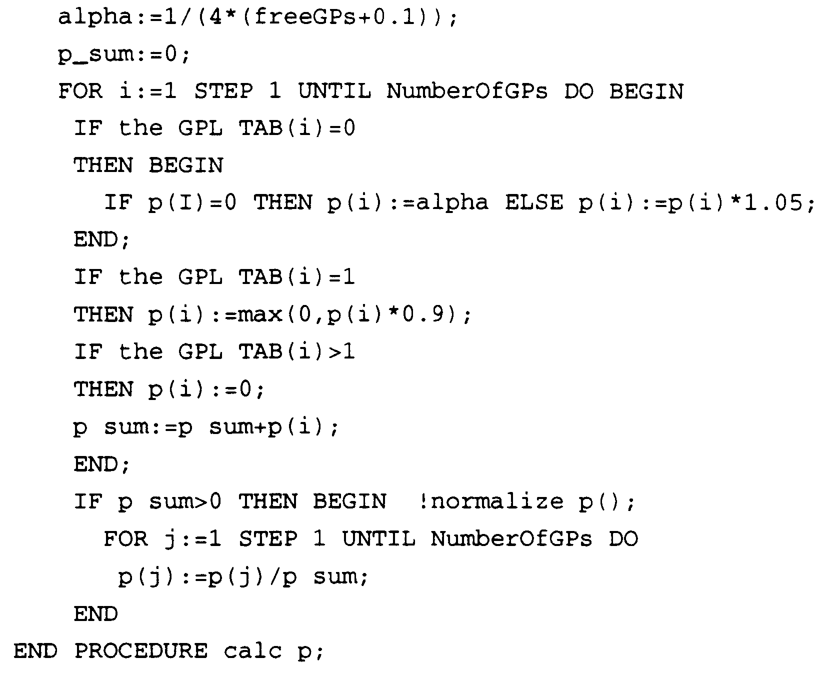

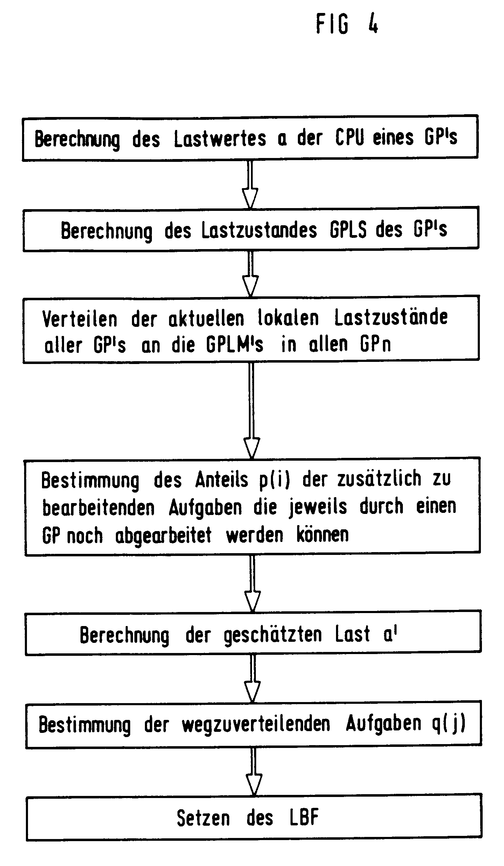

In Fig. 4 ist ein Ablaufdiagramm, in dem die einzelnen Programmprozeduren angedeutet sind, die zur Abarbeitung von beispielsweise lokal auftretenden Überlasten an einen Gruppenprozessor GPj aufgerufen und abgearbeitet werden.

Die Berechnung von den im Verteilschema Fig. 3 angegebenen Werten pi(n), qj sowie der Lastzustand GPLSj geschieht wie oben bereits erwähnt im Programmodul Load Manager GPLM des Gruppenprozessors GPj. Der GPLM ist ein Prozeß der von der virtuellen Prozessoreinheit VCPU-OAMH abgearbeitet wird.

Nachfolgend werden die im Ablaufdiagramm aufgezeigten Schritte beschrieben:
- Berechnung des Lastwertes a:
   Der Lastwert a wird aus der Belastung der zentralen Prozessoreinheit des jeweiligen Gruppenprozessors ermittelt.
- Bestimmung des Load States GPLS eines Gruppenprozessors GPs:
   Zur Bestimmung des Load State GPLS wird ein integrierender Startindikator S, der in der Art eines "Schätzers" eine andauernde Überlastsituation erkennt, ein Load Balancing Flag LBF sowie x eine Hysteresebreite, der beispielsweise der Wert 0,1 zugewiesen werden kann, verwendet.

Die Bestimmung der quantifizierten Größen GPLS wird nach folgendem Pseudocode durchgeführt:
a) Bisheriger GPLS "Normal" 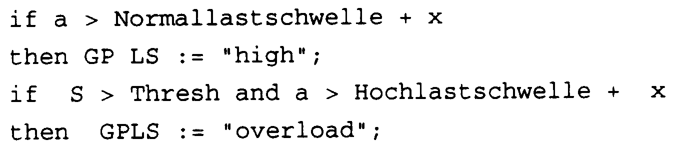
b) Bisheriger GPLS "high" 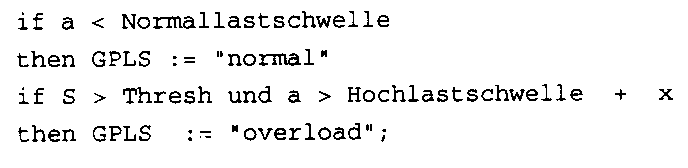
c)Bisheriger GPLS "overload" 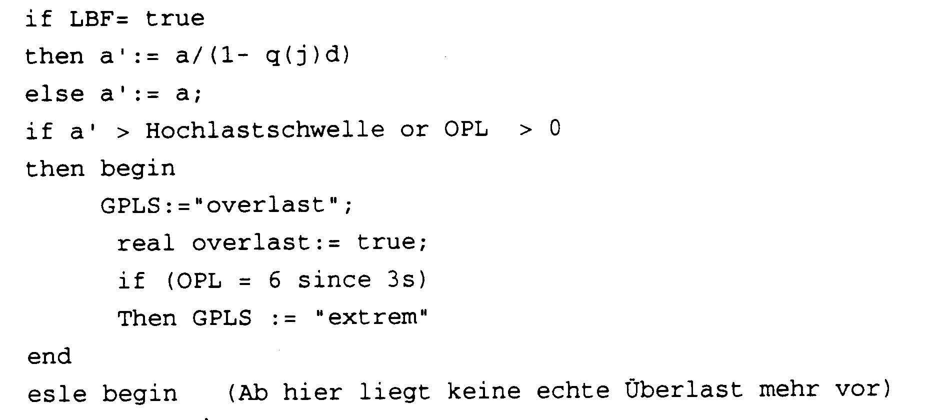 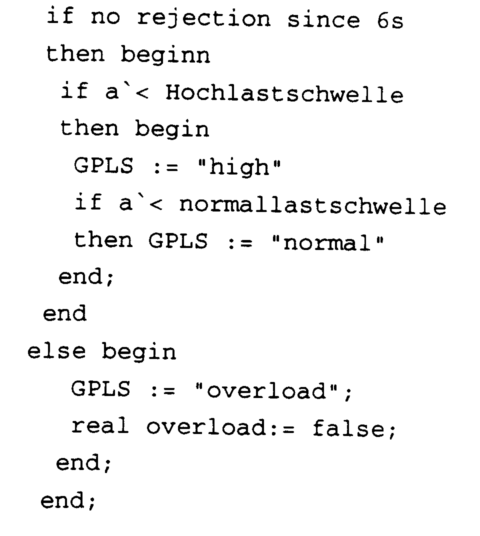
d) Bisheriger GPLS ="extrem"
Von den eigenen Anschlußeinheiten LTGs wird kein neuer Lastverkehr mehr angenommen.

Die Programmprozedur "Bestimmung GPLS" wird im wesentlichen aus dem Lastwert a des Prozessors der letzten Sekunde bestimmt. Falls bereits verteilt wird, wird über die Größe a', die die tatsächliche an den Gruppenprozessor anliegende Last ausdrückt, berechnet. Der Lastwert a' stellt einen Schätzer für die zu erwartende Last für die zentrale Prozessoreinheit CPU des nächsten Kontrollintervalls dar.
- Informieren der Load Manager auf allen GPn über die Lastzustände aller GPn
   Zwei Möglichkeiten der Informationsverteilung kommen dazu in Betracht:
   a) Alle GPLMs senden ihre lokale Lastinformation (GPLS, OPL) an einen zentralisierten Prozeß, Load Control Master (LOCM) genannt, auf einem ganz bestimmten Prozessor GPx. Der LOCM sammelt die Lastinformationen und sendet so rasch als möglich die gesammelten Informationen an alle GPLMs im System.
   b) Mittels einer 'jeder**-**informiert-jeden' Kommunikation zwischen den GPLMs verteilt jeder GPLM seine lokale Lastinformation (GPLS, OPL) an die GPLM aller anderen GPn im System.

   Nach einem kurzen Zeitintervall der Zwischenspeicherung aller GPLS werden diese an alle GPn verteilt und dort jeweils in eine Tabellen eingetragen. Nach einem kurzem Zeitintervall, stehen aktuallisierte GPLS von jedem Gruppenprozssor GPx zur Eintragung in eine Gruppenprozessortabelle bereit.
- Bestimmung der zusätzlich abzuarbeitenden Aufgaben p(i):
   Der Wert p(i) ist dabei der Anteil der von den "Heim- Gruppenprozessoren " wegverteilten Calls C, die auf einen freien Gruppenprozessor GP(j) bearbeitet werden sollen.
   Der Wert p(i) wird dabei nach folgender Strategie bestimmt:
   a) GPLS(i) = "normal"
      p(i) kann erhöht werden, da auf GP(i) noch Bearbeitungskapazität ausgenutzt werden kann.
   b) GPLS(i) = "high"
      p(i) wird verringert, da GP(i) zuviel Last hat.
   c) GPLS(i) = "overload"
      p(i) wird auf Null gesetzt, da GP(i) in einem Betriebszustand der Überlast ist.

   Bei der Neueinstellung der Werte p(i) wird von einem durchschnittlichen Verteilanteil pro freien Gruppenprozessor GP(i) ausgegangen. Solange sich ein GP(i) im Lastzustand "overload" befindet, ist p(i)=0. Wechselt der Lastzustand von "overload" in "normal" oder "high" so wird der Wert p(i):= 1/(C*(Anzahl der freien GP(x)) festgelegt. C ist ein Parameter, in dem vermittlungsspezifische Überlegungen betreffend der Vermeidung eines Überschwingens des Lastverteilsystems in der Einschwingphase eingeht.
- Bestimmung der wegzuverteilenden Aufgaben q(j)
   Bevor der Wert q(j), der den Anteil der wegzuverteilenden Calls angibt, wenn ein Gruppenprozessor im Lastzustand Überlast ist, wird an Hand der p(i) festgestellt ob überhaupt verteilt werden kann. Ergibt die Summe der noch nicht normierten p(n) einen Wert der größer als 1 ist, so wird der Wert q(j) nach den Erfordernissen des jeweiligen GP(j) bestimmt. Anhand des Lastwertes a' wird festgestellt, ob q(j) erhöht oder erniedrigt werden sollte. Falls der GP(j) nicht im Lastzustand "overload" ist, wird immer versucht q(j) zu erhöhen.
   a) Falls die vermittlungstechnische Überlaststufe OPL > 0 oder Lastwert a > 0,8 + x (mit x =0,1) ist, wird q(j) erhöht.
   b) Falls GPLS(j) = "overload" und OPL = 0 und Lastwert a < 0,8 -x ist wird q(j) verringert.
   c) 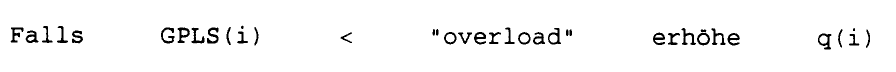 Die Bestimmung des Wertes q(j) im Fall c bezieht sich auf den Einstieg in die Lastverteilung.

Normalerweise sollte dann q(j)= 1 sein, um bei plötzlicher Überlast maximale Verteilung zu bekommen. Wenn das Kommunikationssystems K an seiner Leistungsgrenze arbeitet, muß q(j) kleiner sein, um die Lastverteilung, durch Eintritt zusätzlicher Gruppenprozessoren GPx in Überlast nicht zu gefährden. Aus diesem Grund wird q(j) verringert, falls die Summe der einzelnen p(n) kleiner als 1 ist.

Um mögliche Schwingungen des Überlastverfahrens zu vermeiden, ist es vorteilhaft, wenn vor einer Verringerung des Werte q(j) ein kurzer Zeitintervall abgewartet wird. Nachdem festgestellt wurde, daß der Gruppenprozessor GP(j) Calls verteilen möchte, wird das Load Balancing Flag LBF "true" , wenn nicht, wird das LBF "false" gesetzt. In einem mit Guard Period bezeichneten Schutzintervall, wird das Load Balancing Flag LBF :=false gesetzt, obgleich der Gruppenprozessor GP(j) sich im Lastzustand "overload" befinden kann.

Bei einer Neueinstellung des Wertes q(j) wird folgender Algorithmus angewendet:
Falls q(j)= 0 wird q(j):= min (1, (Anzahl freier GPx/ Anzahl der GPs die im Lastzustand "overload" sind)). Ist der GPLS von GP(j) nicht im "overload" und q(j) < (Anzahl freier GPs /Anzahl der GPs in "overload"), so wird q(j) :=min(1, Anzahl freier GPs/Anzahl GPs in "overload") gesetzt. Wenn der GP(j) nicht in "overload" ist, ist normalerweise q(j)= 1, um einen schnellen Einstieg in die Lastverteilung zu gewährleisten, falls der GP(j) plötzlich in Überlast gerät. Falls jedoch mehr GPs in "overload" sind als GPs zur Aufnahme von fremder Überlast bereitstehen, wird q(j) passend kleiner gewählt, um die nicht überlasteten GPs vor Überlast zu schützen und damit das System der Lastverteilung nicht zu gefährden.

Das Verteilen der Calls erfolgt wie nachfolgend angegeben: Beim Anliegen eines Calls, stellt der Service Manager SM, der eine direkte Schnittstelle zu den zu bearbeitenden Calls darstellt und die eigentliche Verteilung der Calls vornimmt anhand des LBF fest, ob verteilt werden soll oder nicht. Falls verteilt werden soll, wird untersucht, ob es möglich ist den anliegen Call zu verteilen. Falls die Verteilung im Prinzip möglich und erwünscht ist, wird entschieden, ob dieser spezielle Call verteil werden soll. Dazu wird der Quotient aus den bisher in dem Zeitintervall verteilen Calls mit der Anzahl aller ankommenden Calls gebildet und mit q(j) verglichen. Ist der Quotient größer als q(j), wird der Call verteilt. Ist beispielsweise die Anzahl der bisher angekommenen Calls 20, die der bisher verteilten Calls 4 und der Wert q(i)=0,25, so ergibt sich aus dem Quotienten 4/20, daß dieser kleiner als q(j) ist. In diesem Fall wird der Call verteilt. Wenn der Call verteilt werden soll, wird dazu analog anhand der Werte von p(j) entschieden, welcher Gruppenprozessor GPx die Bearbeitung des Calls übernimmt.

## Patentansprüche

1. Verfahren zum Lastenausgleich in einem Multiprozessorsystem, insbesondere ein Multiprozessorsystem eines Kommunikationssystems (K), bei dem anfallende Aufgaben von mehreren Prozessoren (GPn) unter Realzeitbedingungen abgearbeitet werden können,
mit folgenden Verfahrensschritten:
- jeder Prozessor(GPi) ermittelt seinen Lastzustand(GPLSi) in Form einer quantifizierten Größe,
- jedem Prozessor(GPi) werden die Lastzustände(GPLSn) der anderen Prozessoren(GPn) innerhalb eines Zeitrasters mitgeteilt,
- jeder Prozessor(GPi) gibt in Abhängigkeit vom Überschreiten einer bestimmten Größe seines Lastzustandes(GPLSi) und in Abhängigkeit von den Lastzuständen der übrigen Prozessoren(GPn) zumindest einen Teil der bei ihm anfallenden Aufgaben an die übrigen Prozessoren(GPn) ab,
- die abgegebenen Aufgaben werden entsprechend der Lastzustände (GPLSn) der übrigen Prozessoren(GPn) auf diese aufgeteilt.

2. Verfahren nach Anspruch 1,
**dadurch gekennzeichnet**,
daß ein Prozessor(GPi) nur so viele Aufgaben abgibt, daß sein Lastzustand(GPLS) wieder die genannte bestimmte Größe unterschreitet.

3. Verfahren nach Anspruch 1,
**dadurch gekennzeichnet**,
daß die die Lastzustände charakterisierenden quantifizierten Größen jeweils in deren oberen sowie unteren Bereichsübergängen mit einem Hysteresewert versehen werden.

4. Verfahren nach Anspruch 1,
**dadurch gekennzeichnet**,
daß bei Abgabe von Aufgaben von einem Prozessor(GPi) an die übrigen Prozessoren (GPn) zusätzlich ein Maß für eine Aufgabenabwehr des Prozessors(GPi) bestimmt wird.

5. Verfahren nach Anspruch 1,
**dadurch gekennzeichnet**,
daß die prozessorbezogenen Lastzustände (GPLSn) mittels einer 'jeder-informiert-jeden' Kommunikation von den einzelnen Control Managern der Prozessoren (GPn) direkt an alle anderen Control Managern der Prozessoren (GPn) im Kommunikationssystem (K) verteilt werden.

6. Verfahren nach Anspruch 1,
**dadurch gekennzeichnet**,
daß die prozessorbezogenen Lastzustände(GPLSn) im Load Control Manager (LOCM) eines bestimmten Prozessors(GPx) zusammengefaßt werden.

7. Verfahren nach Anspruch 6,
**dadurch gekennzeichnet**,
daß entsprechend eines Zeitrasters die in dem bestimmten Prozessor(GPx) zusammengefaßten Lastzustände(GPLSn) jeweils in Tabellen der Prozessoren(GPn) abgespeichert werden.

8. Verfahren nach einem der vorhergehenden Ansprüche,
**dadurch gekennzeichnet**,
daß in Abhängigkeit vom jeweiligen Lastzustand (GPLS) der Prozessoren der Anteil (pi(n)) der zusätzlich durch sie noch abarbeitbaren Aufgaben festgelegt wird.

9. Verfahren nach einem der vorherigen Ansprüche,
**dadurch gekennzeichnet**,
daß in Abhägigkeit vom jeweiligen Lastzustand (GPLSn) der Prozessoren (GPi) die von diesem wegzuverteilenden Aufgaben (q(j)) erhöht oder vermindert werden.

10. Verfahren nach einem der vorherigen Ansprüche,
**dadurch gekennzeichnet**,
daß in jedem Prozessor in Abhängigkeit vom Summenergebnis, aus den Anteilen (p(i)) der durch die übrigen Prozessoren zusätzlich zu übernehmenden Aufgaben, der Anteil der wegzuverteilenden Aufgaben (q(j)) im Überlastfall bestimmt wird.

## Claims

1. Method for load equalization in a multiprocessor system, in particular a multiprocessor system for a communication system (K), in which jobs that occur can be processed by a plurality of processors (GPn) in real-time conditions,
having the following method steps:
- each processor (GPi) determines its load state (GPLSi) in the form of a quantified variable,
- the load states (GPLSn) of the other processors (GPn) are reported to each processor (GPi) within a time pattern,
- depending on whether its load state (GPLSi) exceeds a specific level and depending on the load states of the other processors (GPn), each processor (GPi) transfers at least a portion of the jobs that arrive at it to the other processors (GPn),
- the transferred jobs are distributed between the other processors (GPn), depending on the load states (GPLSn) of the other processors (GPn).

2. Method according to Claim 1,
characterized
in that a processor (GPi) transfers only sufficient jobs that its load state (GPLS) once again falls below the said specific level.

3. Method according to Claim 1,
characterized
in that the quantified variables which characterize the load states are each provided with a hysteresis value at both their upper and lower range boundaries.

4. Method according to Claim 1,
characterized
in that, when jobs are transferred from one processor (GPi) to the other processors (GPn), a measure for defending the processor (GPi) against jobs is also determined.

5. Method according to Claim 1,
characterized
in that the processor-related load states (GPLSn) are distributed by means of "each-informs-each" communication by the individual control managers of the processors (GPn) directly to all the other control managers of the processors (GPn) in the communication system (K).

6. Method according to Claim 1,
characterized
in that the processor-related load states (GPLSn) are combined in the load control manager (LOCM) of a specific processor (GPx).

7. Method according to Claim 6,
characterized
in that the load states (GPLSn) combined in the specific processor (GPx) are each stored in tables in the processors (GPn) in accordance with a time pattern.

8. Method according to one of the preceding claims,
characterized
in that the proportion (pi(n)) of the jobs which can still additionally be processed by the processors is defined as a function of the respective load state (GPLS) of the said processors.

9. Method according to one of the preceding claims,
characterized
in that the jobs (q(j)) which can be distributed away from a processor are added to or subtracted from as a function of the respective load state (GPLSn) of the said processors (GPi).

10. Method according to one of the preceding claims,
characterized
in that the proportion of the jobs (g(j)) which can be distributed away from a given processor is determined in each processor, in the event of an overload, as a function of the result of the sum of the proportions (p(i)) of the jobs which can additionally be carried out by the other processors.

## Revendications

1. Procédé pour équilibrer la charge dans un système multiprocesseur, en particulier dans un système multiprocesseur d'un système de communication (K) dans lequel les tâches qui se présentent peuvent être traitées par plusieurs processeurs (GPn) en temps réel
suivant les étapes de processus suivantes:
- chaque processeur (GPi) détermine son état de charge (GPLSi) sous forme d'une grandeur quantifiée,
- chaque processeur (GPi) reçoit les états de charge (GPLSn) des autres processeurs (GPn) dans le cadre d'une trame de temps,
- chaque processeur (GPi) transfère aux autres processeurs (GPn), en fonction du dépassement d'une certaine grandeur de son état de charge (GPLSi) et en fonction des états de charge des autres processeurs (GPn), au moins une partie des tâches qui lui incombent,
- les tâches transférées sont réparties sur les autres processeurs (GPn) en fonction de leurs états de charge (GPLSn).

2. Procédé selon la revendication 1
**caractérisé par le fait**
qu'un processeur (GPi) ne transfère qu'un nombre de tâches tel que son état de charge (GPLS) repasse au-dessous de la certaine grandeur citée.

3. Procédé selon la revendication 1
**caractérisé par le fait**
que chaque grandeur quantifiée caractérisant les états de charge est coiffée d'une valeur d'hystérésis dans ses zones de transition supérieure et inférieure.

4. Procédé selon la revendication 1
**caractérisé par le fait**
que, en supplément, lors du transfert de tâches d'un processeur (GPi) aux autres processeurs (GPn), une grandeur est déterminée pour un refus de tâches par le processeur (GPi).

5. Procédé selon la revendication 1
**caractérisé par le fait**
que les états de charge (GPLSn), propres aux processeurs, sont distribués, au moyen d'une communication 'chacun informe chacun', par chaque Control Manager des processeurs (GPn) directement à tous les autres Control Manager des processeurs (GPn) du système de communication (K).

6. Procédé selon la revendication 1
**caractérisé par le fait**
que les états de charge (GPLSn), propres aux processeurs, sont rassemblés dans le Load Control Manager (LOCM) d'un processeur (GPx) déterminé.

7. Procédé selon la revendication 6
c**aractérisé par le fait**
que, en respectant une trame de temps, les états de charge (GPLSn) rassemblés dans le processeur (GPx) déterminé sont enregistrés respectivement dans des tableaux des processeurs (GPn).

8. Procédé selon l'une des revendications précédentes
**caractérisé par le fait**
que, en fonction de chaque état de charge (GPLS) des processeurs, on fixe la partie (pi(n)) des tâches qu'ils peuvent encore exécuter en supplément.

9. Procédé selon l'une des revendications précédentes
**caractérisé par le fait**
que, en fonction de chaque état de charge (GPLS) des processeurs (GPi), on augmente ou diminue le nombre de tâches (q (j)) qu'il faut dérouter de ces processeurs.

10. Procédé selon l'une des revendications précédentes
**caractérisé par le fait**
que, dans chaque processeur, en fonction du résultat de l'addition, le nombre de tâches (q (j)), qu'il faut dérouter en cas de surcharge, est déterminé à partir des parts (p (i)) des tâches que les autres processeurs doivent prendre en charge en supplément.
